# EUROPÄISCHE PATENTSCHRIFT

(11) **EP 0 501 387 B1**
(45) Veröffentlichungstag und Bekanntmachung des Hinweises auf die Patenterteilung: **17.07.1996**
(21) Anmeldenummer: 92103077.1
(22) Anmeldetag: 24.02.1992
(51) Int. Cl.: F25D 21/06, F25B 41/06

(54) **Verfahren und Vorrichtung zur Leistungsoptimierung und Abtausteuerung von Kältemittelverdampfern**
Method and device for performance optimising and defrosting control of refrigerant evaporators
Procédé et dispositif pour optimaliser la performance et pour commander la dégirage d'évaporateurs de réfrigérant

(30) Priorität: 25.02.1991 DE 4105880
(43) Veröffentlichungstag der Anmeldung: 02.09.1992
(73) Patentinhaber: KÜBA KÄLTETECHNIK GmbH, 82065 Baierbrunn (DE)
(72) Erfinder: Jyrek, Paul, W-8196 Eurasburg (DE); Linker, Helmut, W-4690 Herne 2 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 154 119
- EP-A- 0 285 690
- EP-A- 0 378 152
- CH-A- 676 634
- DE-A- 3 333 907
- US-A- 2 666 298
- US-A- 3 681 933
- US-A- 3 922 874
- US-A- 4 901 534

## Beschreibung

Die Erfindung betrifft ein Verfahren und eine Vorrichtung zur Leistungsoptimierung von mit Kältemittel betriebenen, über ein Expansionsventil gespeisten Kühlern von der in den Oberbegriffen der Ansprüche 1 und 4 angegebenen Art.

Ein Verfahren zur Leistungsoptimierung von Kühlern gemäß dem Oberbegriff des Anspruchs 1 ist aus der EP-A-0 378 152 bekannt. Dieses Verfahren ermöglicht in dem jeweiligen Kühlraum eine sehr genaue Temperaturregelung, die sich insbesondere bei empfindlichen Gütern positiv auswirkt.

Aus der US-A-3 681 933 ist eine Abtauregelung für mit Kältemittel betriebenen Kühlern bekannt, wobei der Abtauvorgang dann gestartet wird, wenn der Differenzwert zwischen der Zulufttemperatur und der Verdampfungstemperatur einen vorgebbaren Grenzwert überschreitet.

Aus der US-A-2 666 298 ist ein Verfahren zum Abtauen von mit Kältemittel betriebenen Kühlern bekannt, bei dem zum einen die Raumtemperatur und zum anderen die Oberflächentemperatur des kalten Verdampfers erfaßt wird und immer dann, wenn eine vorgebbare Temperaturdifferenz, die sich aufgrund von Vereisung einstellt, überschritten wird, ein Abtauvorgang in Gang gesetzt wird.

Aufgabe der vorliegenden Erfindung ist es, unter gleichzeitiger Minimierung des erforderlichen technischen Aufwands die bekannten Verfahren dahingehend zu verbessern, daß eine Erkennung des optimalen Abtauzeitpunktes ermöglicht und damit der Betrieb der mit Kältemittel gespeisten Kühlern, insbesondere Ventilator-Luftkühlern, weiter verbessert werden kann.

Gelöst wird diese Aufgabe durch die Verfahrensmerkmale des Anspruchs 1 sowie durch eine Vorrichtung nach Anspruch 4.

Durch das Verfahren nach der Erfindung wird eine besonders zuverlässige Arbeitsweise auch bei schwierigen Betriebsbedingungen, insbesondere bei häufiger Neubeschickung des Kühlraums oder bei häufigem Öffnen der Kühlraumtüre ermöglicht, da durch derartige Vorgänge bedingte Störeffekte weitestgehend ausgeschaltet werden. Wesentlich ist dabei, daß im Zusammenhang mit der Erfassung des Kältemitteldurchflusses der Zeitfaktor berücksichtigt wird und somit durch die parallele Berücksichtigung der Temperaturdifferenz und der Durchflußveränderung des Kältemittels und durch eine Verknüpfung der Ergebnisse dieser Parallelüberwachung Störeinflüsse praktisch vollständig ausgeschaltet werden können.

Nach einer vorteilhaften Ausgestaitung der Erfindung wird die Zulufttemperatur als Raumthermostat-Funktion zur Steuerung des Verdichters oder der Verdichter verwendet. Das von dem die Zulufttemperatur erfassenden Fühler gelieferte Signal wird dazu in der Recheneinheit zusätzlich in der Weise ausgewertet, daß es mit einem vorgebbaren Sollwert verglichen wird und bei Über- bzw. Unterschreiten eines auf den Sollwert bezogenen Schwellwertbereichs, der einer Schalthysterese eines Raumthermostaten entspricht, ein Schaltsignal zur Ab- bzw. Zuschaltung des Verdichters erzeugt. Diese Raumthermostat-Funktion ist während des Abtaubetriebs außer Funktion. Von besonderem Vorteil ist im Zusammenhang mit dieser realisierten Raumthermostat-Funktion, daß ein sonst erforderlicher teurer Raumthermostat eingespart wird und auch sehr kleine Schalthysteresewerte vorgegeben werden können, was sich auf die Qualität der im jeweiligen Kühlraum gespeicherten Produkte sehr günstig auswirkt.

Vorteilhafte Merkmale einer Vorrichtung zur Durchführung des Verfahrens nach der Erfindung sind in den Ansprüchen 5 bis 8 angegeben.

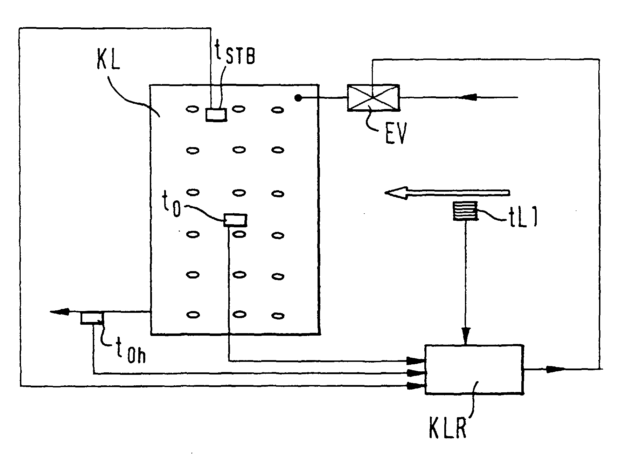

Ein Ausführungsbeispiel der Erfindung wird unter bezugnahme auf die Zeichnung erläutert.

Die einzige Figur der Zeichnung zeigt einen Ventilator-Luftkühler, der mit den zur Durchführung des erfindungsgemäßen Verfahrens erforderlichen Meß-, Regel- und Steuereinheiten ausgestattet ist.

Ein Ventilator-Luftkühler KL, dessen durch ein Lamellenpaket geführte Rohrleitungen über ein Expansionsventil EV mit Kältemittel beaufschlagt sind, wird von einem Luftstrom in Richtung des angegebenen Pfeiles durchströmt, wobei dieser Luftstrom mittels eines nicht gezeigten Ventilators erzeugt wird.

Etwa auf halber Rohrlänge einer Verteilung bzw. eines Leitungsstranges ist im Luftkühler KL ein Temperaturfühler in unmittelbarem Kontakt mit der Rohrleitung angeordnet, und mittels dieses Temperaturfühlers wird die Verdampfungstemperatur t₀ gemessen. Das Meßsignal wird einer Recheneinheit KLR zugeführt.

Am Verdampferausgang wird ebenfalls mittels eines Temperaturfühlers die Kältemitteltemperatur t₀ₕ gemessen, und die Meßwerte werden ebenfalls der Recheneinheit KLR zugeführt.

Die Temperatur tL 1 der Zuluft wird mittels eines im Zuluftstrom angeordneten Temperaturfühlers gemessen, und auch diese Meßwerte erhält die Recheneinheit KLR. Im oberen Bereich des Luftkühlers KL ist ein weiterer Temperaturfühler angeordnet, der ein Temperaturbegrenzungssignal t_{STB} liefert, wenn eine Abtauheizung in Betrieb ist und bei Erreichen einer bestimmten Luftkühlertemperatur abgeschaltet werden muß. Dieses Temperatursignal t_{STB} wird ebenfalls der Recheneinheit KLR zugeführt.

Als Expansionsventil EV wird vorzugsweise ein mittels eines Schrittschaltmotors betätigbares Nadel- oder Kugelventil verwendet, da über eine entsprechende Schrittzählung der Öffnungs- bzw. Schließgrad des Ventils auf einfache Weise und sehr exakt bestimmt werden kann.

Mittels dieser Anordnung ist es zusätzlich zu der eingangs bereits angegebenen Leistungsoptimierung möglich, den optimalen Abtauzeitpunkt bestmöglich zu ermitteln, und zwar auch dann, wenn im Betrieb der Kälteanlage Störungen in Form von Neubeschickungsvorgängen oder wiederholtem Öffnen von Kühlraumtüren gegeben sind.

Durch die Überwachung der Temperaturdifferenz zwischen der Zulufttemperatur tL 1 und der Verdampfungstemperatur t₀ ist es möglich, ein eine Vereisung kennzeichnendes Signal zu erhalten, da ein Überschreiten einer bestimmten Temperaturdifferenz gleichbedeutend damit ist, daß sich auf der Fläche des Luftkühlers Eis bzw. Reif in erheblichem Ausmaß gebildet hat und damit der gewünschte Temperaturaustausch zwischen dem Kältemittel und der durchströmenden Luft nicht mehr erfolgen kann.

Dieses Kennsignal alleine ermöglicht es aber noch nicht, Auswirkungen der in der Praxis auftretenden Störgrößen zu verhindern.

Aus diesem Grunde wird zusätzlich der Kältemitteldurchfluß überwacht und geprüft, ob das Expansionsventil über einen vorgebbaren längeren Zeitraum den Durchfluß verringert, denn diese Funktionsweise des Expansionsventils ist ein Anzeichen dafür, daß im Verdampfer Vereisung aufgetreten ist.

In der Recheneinheit KLR wird die Arbeitsweise des Expansionsventils EV, das heißt die Schließ- und Öffnungsvorgänge dieses Expansionsventils EV, überwacht, und zwar unter Berücksichtigung des Zeitfaktors.

Durch eine Und-Verknüpfung der beiden Parallel-Überwachungsvorgänge wird erreicht, daß unabhängig von Störgrößen stets der optimale Zeitpunkt für den notwendigen Beginn eines Abtauvorgangs ermittelt werden kann.

Der Gesamtwirkungsgrad der jeweiligen Kälteanlage wird dadurch, insbesondere in Verbindung mit der durch die im wesentlichen gleichen technischen Mittel erreichten Leistungsoptimierung wesentlich verbessert.

## Patentansprüche

1. Verfahren zur Leistungsoptimierung von mit Kältemittel betriebenen, über ein Expansionsventil gespeisten Ventilator-Luftkühlern, bei dem neben der Lufteintrittstemperatur bzw. Zulufttemperatur (tL 1) sowohl die Verdampfungstemperatur (t₀) des Kältemittels als auch die Kältemitteltemperatur am Kühlerausgang (t₀ₕ) kontinuierlich oder taktweise gemessen und der Differenzwert (Δ t₁) zwischen Zulufttemperatur (tL 1) und Verdampfungstemperatur (t₀) bestimmt und dieser Differenzwert (Δ t₁) mit einem Faktor (x) zwischen 0,6 und 0,7, insbesondere dem Faktor 0,625, multipliziert und der erhaltene Temperatur-Rechenwert (xΔt₁) mit dem Differenzwert (Δ t₀ₕ) der Kältemitteltemperatur am Kühlerausgang (t₀ₕ) und der Verdampfungstemperatur (t₀) verglichen wird, wobei dann in Abhängigkeit von dem Vergleichsergebnis das luftkühlereingangsseitige Expansionsventil (EV) kontinuierlich oder taktweise in der Weise angesteuert wird, daß der Differenzwert (Δ t₀ₕ) der Kältemitteltemperatur am Kühlerausgang (tₒₕ) und der Verdampfungstemperatur (t₀) zumindest im wesentlichen gleich dem Temperatur-Rechenwert ist,
dadurch **gekennzeichnet,**
daß der Differenzwert (Δt₁) zwischen der Zulufttemperatur (tL 1) und der Verdampfungstemperatur (t₀) zum Zwecke der Ermittlung des optimalen Abtauzeitpunktes des Kühlers bezüglich des Überschreitens eines vorgebbaren Grenzwertes und parallel dazu der Kältemitteldurchfluß im Hinblick auf einen vorgebbaren Grenzwert einer sich über eine vorgebbare Zeitspanne erstreckenden Durchflußverringerung überwacht werden, daß in Abhängigkeit von beiden Kriterien im Falle des überschreitens der vorgebbaren Grenzwerte Verdichter und Ventilator abgeschaltet werden und eine Abtauheizung so lange zugeschaltet wird bis der Luftkühler eine vorgebbare, dem eisfreien Zustand entsprechende Temperatur erreicht hat, und
daß dann der Verdichter und zeitlich verzögert dazu der Ventilator wieder eingeschaltet werden.

2. Verfahren nach Anspruch 1,
dadurch **gekennzeichnet,**
daß die Zuschaltung des Ventilators dann erfolgt, wenn die Verdampfungstemperatur (t₀) einen vorgebbaren Wert erreicht hat.

3. Verfahren nach einem der vorhergehenden Ansprüche,
dadurch **gekennzeichnet,**
daß in Abhängigkeit von der Zulufttemperatur (tL 1) die Zu- und Abschaltung des Verdichters vorgenommen und dadurch eine Raumthermostat-Funktion realisiert wird.

4. Vorrichtung zur Durchführung des Verfahrens nach einem oder mehreren der vorhergehenden Ansprüche,
**bestehend aus** einem Verdichter, einem Ventilator, einem Luftkühler (KL), einem in der Kühlmittel-Zuführleitung angeordneten Expansionsventil (EV), Temperaturfühlern zur Ermittlung der Zulufttemperatur (tL 1), der Verdampfungstemperatur (t₀) des Kältemittels und der Kältemitteltemperatur am Kühlerausgang (t₀ₕ) sowie einer Recheneinheit zur Bildung der Stellwerte für das Expansionsventil (EV),
dadurch **gekennzeichnet,**
daß ein weiterer Temperaturfühler zur Ermittlung der einem eisfreien Zustand der Luftkühlers (KL) entsprechenden Heizungs-Abschalttemperatur (t_{STB}) vorgesehen und mit der Recheneinheit (KLR) verbunden ist,
daß dem Öffnungsgrad bzw. dem öffnungswinkel des Expansionsventils (EV) entsprechende Signalwerte in der Recheneinheit (KLR) Auswertegrößen für den Kältemitteldurchfluß bilden, und daß über die Recheneinheit (KLR) die Zu- und Abschaltung des Verdichters des Ventilators sowie einer Abtauheizung in Abhängigkeit von dem Differenzwert (Δ t₁) zwischen der Zulufttemperatur (tL 1) und der Verdampfungstemperatur (t₀) einerseits und dem Kältemitteldurchfluss im Hinblick auf eine sich über eine vorgebbare Zeitspanne erstreckende Durchflußverringerung andererseits gesteuert sind.

5. Vorrichtung nach Anspruch 4,
dadurch **gekennzeichnet,**
daß als Expansionsventil (EV) ein über einen Schrittmotor gesteuertes Nadel- oder Kugelventil verwendet ist, und daß der jeweilige Öffnungsgrad des Expansionsventils (EV) in der Recheneinheit (KLR) durch Schrittzählvorgänge erfaßbar ist.

6. Vorrichtung nach Anspruch 4 oder 5,
dadurch **gekennzeichnet,**
daß die Vergleichszeitspanne für die Kühlmittel-Durchflußänderung in der Recheneinheit (KLR) einstellbar ist.

7. Vorrichtung nach einem der vorhergehenden Ansprüche 4 bis 6,
dadurch **gekennzeichnet,**
daß zur Schaffung einer Raumthermostat-Funktion das vom Fühler für die Zulufttemperatur (tL 1) gelieferte Signal in der Recheneinheit (KLR) mit einem vorgebbaren Sollwert verglichen und in Abhängigkeit vom Über- bzw. Unterschreiten eines auf diesen Sollwert bezogenen Toleranzbereichs ein Schaltsignal zur Verdichtersteuerung erzeugt wird.

8. Vorrichtung nach Anspruch 7,
dadurch **gekennzeichnet,**
daß der dem Sollwert zugeordnete Toleranzbereich einstellbar ist.

## Claims

1. Method for the performance optimization of fan-air refrigerators operated with refrigerant and fed via an expansion valve, wherein both the vaporisation temperature (t₀) of the refrigerant and also the refrigerant temperature at the refrigerator output (t₀ₕ) are measured continuously or cyclically in addition to the air inlet temperature or the air supply temperature (tL 1) and the difference value (Δ t₁) between the air supply temperature (tL 1) and the vaporisation temperature (t₀) is determined, and this difference value (Δ t₁) is multiplied by a factor (x) between 0.6 and 0.7, in particular by the factor 0.625, and the so obtained calculated temperature value (xΔ t₁) is compared with the difference value (Δ t₀ₕ) of the refrigerant temperature at the refrigerator outlet (t₀ₕ) and the vaporisation temperature (t₀), wherein, in dependence on the result of the comparison, the expansion valve (EV) at the air refrigerator input side is continuously or cyclically controlled in such a manner that the difference value (Δ t₀ₕ) of the refrigerant temperature at the refrigerator output (t₀ₕ) and the vaporisation temperature (t₀) is at least substantially the same as the calculated temperature value,
characterised in that
the difference value (Δ t₁) between the air supply temperature (tL 1) and the vaporisation temperature (t₀) is monitored for the purpose of finding the ideal defrosting time point for the refrigerator with respect to a predeterminable, limiting value being exceeded, in that parallel thereto the refrigerant through-flow is monitored with respect to a predeterminable boundary value of a reduction of the through-flow extending over a predeterminable time interval; in that, in dependence on the two criteria, the compressor and the fan are switched off in the event that the predeterminable boundary values are exceeded and a defrosting heater is switched in until the air refrigerator has reached a predeterminable temperature corresponding to the ice-free state; and in that the compressor and the fan are then switched on again, the fan being switched on with a time-delay relative to the compressor.

2. Method in accordance with claim 1,
characterised in that
the switching in of the fan takes place when the vaporisation temperature (t₀) has reached a preterminable value.

3. Method in accordance with one of the preceding claims,
characterised in that
the switching in and switching off of the compressor is effected in dependence on the air supply temperature (tL 1) and a room thermostat function is thereby realised.

4. Apparatus for carrying out the method in accordance with one or more of the preceding claims, comprising a compressor, a fan, an air refrigerator (KL), an expansion valve (EV) arranged in the coolant supply line, temperature sensors for determining the air supply temperature (tL 1), the vaporisation temperature (t₀) of the refrigerant and the refrigerant temperature at the refrigerator outlet (t₀ₕ), and also a computing unit for forming the positioning values for the expansion valve (EV),
characterised in that
a further temperature sensor is provided for determining the heating switch off temperature (t_{STB}) corresponding to the ice-free state of the air cooler (KL) and is connected to the computing unit (KLR); in that signal values corresponding to the degree of opening or the angle of opening of the expansion valve (EV) form evaluation parameters for the refrigerant through-flow in the computing unit (KLR); and in that the switching in and switching off of the compressor, of the fan and also of a defrosting heater are controlled via the computing unit (KLR) in dependence on the difference value (Δ t₁) between the air supply temperature (tL 1) and the vaporisation temperature (t₀) on the one hand, and in dependence on the refrigerant through-flow having regard to a reduction of the through-flow extending over a predeterminable time interval on the other hand.

5. Apparatus in accordance with claim 4,
characterised in that
a needle or ball valve controlled via a stepping motor is used as the expansion valve (EV), and in that the respective degree of opening of the expansion valve (EV) can be detected in the computing unit (KLR) by step-counting procedures.

6. Apparatus in accordance with claim 4 or claim 5,
characterised in that
the comparison time interval for the change in through-flow of the refrigerant can be set in the computing unit (KLR).

7. Apparatus in accordance with one of the preceding claims 4 to 6,
characterised in that
the signal delivered from the sensor for the air supply temperature (tL 1) is compared in the computing unit (KLR) with a predeterminable desired value in order to provide a room thermostat function and a switching signal for control of the compressor is generated in dependence on a range of tolerance related to this desired value being exceeded or fallen short of.

8. Apparatus in accordance with claim 7,
characterised in that
the tolerance range associated with the desired value can be set.

## Revendications

1. Procédé pour optimaliser la performance de réfrigérants à air à ventilateur, exploités avec un fluide frigorigène, alimentés par une soupape de détente, procédé dans lequel en plus de la température d'entrée d'air ou de la température de l'air amené (tL1), aussi bien la température d'évaporation (t₀) du fluide frigorigène qu'également la température du fluide frigorigène à la sortie du réfrigérant (t₀h) est mesurée de manière continue ou périodiquement, et la différence (Δt₁) entre la température de l'air amené (tL1) et la température d'évaporation (t₀) est déterminée et cette différence (Δt₁) est multipliée par un facteur (x) compris entre 0,6 et 0,7, en particulier un facteur de 0,625, et la valeur de calcul de température obtenue (xΔt1) est comparée à la différence (Δt₀h) entre la température du fluide frigorigène à la sortie du réfrigérant (t₀h) et la température d'évaporation (t₀), la soupape de détente (EV) située du côté de l'entrée du réfrigérant étant commandée en continu ou périodiquement, en fonction du résultat de la comparaison, de manière que la différence (Δt₀h) entre la température du fluide frigorigène à la sortie du réfrigérant (t₀h) et la température d'évaporation (t₀) soit au moins essentiellement égale à la valeur de calcul de température, caractérisé par le fait que sont surveillés la différence (Δt₁) entre la température de l'air amené (tL1) et la température d'évaporation (t₀) afin de déterminer l'instant de dégivrage optimal du réfrigérant quant au dépassement d'une valeur limite donnée, et parallèlement à cela le débit de fluide frigorigène en tenant compte d'une valeur limite donnée d'une diminution du débit s'étendant sur un intervalle de temps donné,
qu'en fonction des deux critères, en cas de dépassement des valeurs limites données, le compresseur et le ventilateur sont arrêtés et un chauffage de dégivrage est mis en marche jusqu'à ce que le réfrigérant à air ait atteint une température donnée, correspondant à un état exempt de givre, et
qu'alors sont de nouveau mis en marche le compresseur, et le ventilateur en outre retardé.

2. Procédé selon la revendication 1, caractérisé par le fait que la mise en marche du ventilateur a lieu lorsque la température d'évaporation (t₀) a atteint une valeur donnée.

3. Procédé selon l'une des revendications précédentes, caractérisé par le fait que la mise en marche et l'arrêt du compresseur sont effectués en fonction de la température de l'air amené (tL1) et qu'une fonction de thermostat de chambre est réalisée de cette façon.

4. Dispositif pour la mise en oeuvre du procédé selon l'une ou plusieurs des revendications précédentes, se composant d'un compresseur, d'un ventilateur, d'un réfrigérant à air (KL), d'une soupape de détente (EV) disposée dans la canalisation d'alimentation en fluide frigorigène, de capteurs de température pour la détermination de la température de l'air amené (tL1), de la température d'évaporation (t₀) du fluide frigorigène et de la température du fluide frigorigène à la sortie du réfrigérant (t₀h) ainsi que d'une unité de calcul pour établir les valeurs de réglage pour la soupape de détente (EV), caractérisé par le fait qu'un capteur de température supplémentaire est prévu pour la détermination de la température d'arrêt du chauffage (t_{STB}) correspondant à un état exempt de glace du réfrigérant à air (KL), et est relié à l'unité de calcul (KLR),
que des valeurs de signaux correspondant au degré d'ouverture ou à l'angle d'ouverture de la soupape de détente (EV) établissent dans l'unité de calcul (KLR) des grandeurs d'évaluation pour le débit de fluide frigorigène, et que la mise en marche et l'arrêt du compresseur, du ventilateur, ainsi que du chauffage de dégivrage, sont commandés par l'unité de calcul (KLR) en fonction de la différence (Δt₁) entre la température de l'air amené (tL1). et la température d'évaporation (t₀) d'une part, et du débit de fluide frigorigène en tenant compte d'une diminution de débit s'étendant sur un intervalle de temps donné, d'autre part.

5. Dispositif selon la revendication 4, caractérisé par le fait qu'une soupape à aiguille ou à bille commandée par un moteur pas-à-pas est utilisée comme soupape de détente (EV) et que le degré d'ouverture respectif de la soupape de détente (EV) peut être saisi dans l'unité de calcul (KLR) par comptage des pas.

6. Dispositif selon la revendication 4 ou 5, caractérisé par le fait que l'intervalle de temps de comparaison pour le changement de débit de fluide frigorigène est réglable dans l'unité de calcul (KLR).

7. Dispositif selon l'une des revendications 4 à 6 précédentes, caractérisé par le fait que, pour la création d'une fonction de thermostat de chambre, le signal délivré par le capteur pour la température d'air amené (tL1) est comparé dans l'unité de calcul (KLR) avec une valeur de consigne donnée et qu'un signal de commutation est produit pour la commande du compresseur en fonction du dépassement par valeurs supérieures ou par valeurs inférieures d'une zone de tolérance liée à cette valeur de consigne.

8. Dispositif selon la revendication 7, caractérisé par le fait que la zone de tolérance associée à la valeur de consigne est réglable.
